(19) Europäisches Patentamt
European Patent Office
Office européen des brevets

(11) EP 1 497 380 B1

(12) **EUROPEAN PATENT SPECIFICATION**

(45) Date of publication and mention of the grant of the patent:
**15.01.2014 Bulletin 2014/03**

(21) Application number: **02736264.9**

(22) Date of filing: **24.04.2002**

(51) Int Cl.:
***C09D 4/06*** *(2006.01)* ***C08F 290/06*** *(2006.01)*
***C03C 25/10*** *(2006.01)*

(86) International application number:
**PCT/NL2002/000275**

(87) International publication number:
**WO 2003/091346 (06.11.2003 Gazette 2003/45)**

# (54) RADIATION CURABLE COATING COMPOSITION FOR OPTICAL FIBER WITH REDUCED ATTENUATION LOSS

DURCH STRAHLUNG HÄRTBARE ZUSAMMENSETZUNG FÜR OPTISCHE FASER MIT REDUZIERTEM DÄMFPUNGSVERLUST

COMPOSITION DE REVETEMENT DURCISSABLE PAR RAYONNEMENT DESTINEE A DES FIBRES OPTIQUES, PRESENTANT DES PERTES D'ATTENUATION REDUITES

(84) Designated Contracting States:
**FR IT NL**

(43) Date of publication of application:
**19.01.2005 Bulletin 2005/03**

(73) Proprietor: **DSM IP Assets B.V.**
**6411 TE Heerlen (NL)**

(72) Inventors:
- **NAGELVOORT, Sandra, Joanna**
  **NL-3137 WN Vlaardingen (NL)**
- **VAN EEKELEN, Joannes, Adrianus**
  **NL-3181 PE Rozenburg (NL)**
- **ABEL, Adrianus, Gijsbertus, Maria**
  **NL-2901 KA Capelle a/d/Ijssel (NL)**
- **GEUS, Gouke, Dirk, Jan**
  **NL-3135 XP Vlaardingen (NL)**
- **ALKEMA, Duurt, Pieter, Willem**
  **NL-2565 CB Den Haag (NL)**
- **ROBA, Giacomo, Stefano**
  **I-20052 Monza (IT)**
- **ARIMONDI, Marco**
  **I-27100 Pavia (IT)**
- **TERRUZZI, Lidia**
  **I-20050 Triuggio (IT)**
- **FOGLIANI, Sabrina**
  **I-20090 Segrate (IT)**

(74) Representative: **Jansen, Cornelis Marinus et al**
**V.O.**
**Johan de Wittlaan 7**
**2517 JR Den Haag (NL)**

(56) References cited:
**WO-A-01/05724 US-A- 4 962 992**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 497 380 B1

## Description

Field of the invention

The present invention relates to a liquid radiation curable coating composition, to a cured coating for an optical fiber primary coating, to a coating composition system, to uses of said composition, to a method for formulating a radiation curable coating composition, and to a method for making a cured primary coating for an optical fiber.

Background art

Optical fibers commonly consist of a glass portion (typically with a diameter of about 120-130 μm), inside which the transmitted optical signal is confined. The glass portion is typically protected by an outer coating, typically of polymeric material. This protective coating typically comprises a first coating layer positioned directly onto the glass surface, also known as the "primary coating", and of at least a second coating layer, also known as "secondary coating", disposed to surround said first coating. In the art, the combination of primary coating and secondary coating is sometimes also identified as "primary coating system", as both these layer are generally applied during the drawing manufacturing process of the fiber, in contrast with "secondary coating layers" which may be applied subsequently. In this case, the coating in contact with the glass portion of the fiber is called "inner primary coating" while the coating on the outer surface of the fiber is called "outer primary coating". In the present description and claims, the two coating layers will be identified as primary and secondary coating, respectively, and the combination of the two as "coating system".

The thickness of the primary coating typically ranges from about 25 μm to about 35 μm, while the thickness of the secondary coating typically ranges from about 10 μm to about 30 μm.

These polymer coatings may be obtained from compositions comprising oligomers and monomers that are generally crosslinked by means of UV irradiation in the presence of a suitable photo-initiator. The two coatings described above differ, inter alia, in the mechanical properties of the respective materials. As a matter of fact, whereas the material which forms the primary coating is a relatively soft material, with a relatively low modulus of elasticity at room temperature, the material which forms the secondary coating is relatively harder, having higher modulus of elasticity values at room temperature. The coating system is selected to provide environmental protection to the glass fiber and resistance, inter alia, to the well-known phenomenon of microbending, which can lead to attenuation of the signal transmission capability of the fiber and is therefore undesirable. In addition, coating system is designed to provide the desired resistance to physical handling forces, such as those encountered when the fiber is submitted to cabling operations.

The optical fiber thus composed usually has a total diameter of about 250 μm. However, for particular applications, this total diameter may also be smaller; in this case, a coating of reduced thickness is generally applied.

In addition, as the operator must be able to identify different fibers with certainty when a plurality of fibers are contained in the same housing, it is convenient to color the various fibers with different identifying colors. Typically, an optical fiber is color-identified by surrounding the secondary coating with a third colored polymer layer, commonly known as "ink", having a thickness typically of between about 2 μm and about 10 μm, or alternatively by introducing a colored pigment directly into the composition of the secondary coating.

Among the parameters which characterize primary and secondary coatings performances, elastic modulus and glass transition temperature of the cross-linked materials are those which are generally used to define the mechanical properties of the coating. When referring to the elastic modulus it should be clarified that in the patent literature this is sometimes referred to as "shear" modulus G (or modulus measured in shear), while in some other cases as "tensile" modulus E (or modulus measured in tension). The determination of said elastic moduli can be made by means of DMA (Dynamic mechanical analysis) which is a thermal analysis technique that measures the properties of the materials as they are deformed under periodical stress. For polymeric materials, the ratio between the two moduli is generally 1:3, i.e. the tensile modulus of a polymeric material is typically about three times the shear modulus (see for instance the reference book Mechanical Properties and Testing of Polymers, pp. 183-186; Ed. G. M. Swallowe)

Examples of coating systems are disclosed, for instance, In US patent 4,962,992. In said patent, it is stated that a soft primary coating is more likely to resist to lateral loading and thus to microbending. It thus teaches that an equilibrium shear modulus of about 70-200 psi (0.48-1.38 MPa) is acceptable, while it is preferred that such modulus being of 70-150 psi (0.48-1.03 MPa). These values correspond to a tensile modulus of 1.4-4.13 MPa and 1.4-3.1 MPa, respectively. As disclosed in said patent, a too low equilibrium modulus may cause fiber buckling inside the primary coating and delamination of the coating system. In addition, said patents suggests that the glass transition temperature (Tg) of the primary coating material should not exceed -40°C, said Tg being defined as the temperature, determined by means of stress/strain measurement, at which the modulus of the material changes from a relatively high value occurring in the lower temperature, glassy state of the material to a lower value occurring in the transition region to the higher temperature, elastomeric (or rubbery) state of the material.

US-B-6 459 837 describes an optical fiber cable that includes a single strength member unit comprising a single

strength member or a plurality of strength members within an outer jacket which encircles at least one loosely held optical fiber. US-A-4 474 830 and US-A-5 104 433 are directed to methods for providing an optical fiber with multiple coatings. US-A-6 014 488 describes coated optical fibers having a primary coating layer formulated of a material that has low intrinsic adhesion to the glass fiber, high percentage elongation to break and a high tensile strength.

WO-A-92/04391 describes radiation curable oligomers that are particularly suitable for use in coating compositions for optical fibers. EP-A-1 070 682 provides a radiation curable resin composition for fiber optic coating materials comprising a specific (meth)acrylate urethane compound. WO-A-01/49624 is directed to a composition for coating optical fibers that comprises an oligomeric component and a monomeric component in a defined weight ratio, wherein the monomeric component comprises two or more monomers when the composition is substantially devoid of the oligomeric component. EP-A-0 311 186 describes a coated optical fiber in which the glass fiber has a first enveloping layer of a synthetic rubber and a subsequent enveloping layer of a synthetic resin.

US-B-7 085 466 relates to a method for controlling attenuation losses caused by microbending on the signal transmitted by an optical fiber having an internal glass portion. According to the method, the glass portion is coated with a first coating layer and subsequently with a second coating layer, wherein the polymeric material of the first coating layer has a hardening temperature lower than -10 °C and an equilibrium modulus lower than 1.5 MPa. WO-A-031091177 describes an optical fiber with a glass portion coated with a first and a second coating layer wherein the cured polymeric material of the first coating layer has a defined modulus at specific hardening temperature ranges. US-B-7 085 466 and WO-A-03/091177 both have a filing date of 24 April 2002.

Other examples of coating compositions are disclosed, for instance, in WO 01/05724, which discloses radiation curable fiber optic coating materials comprising a (meth)acrylate urethane compound derived from a polypropylene glycol or comprising a (meth)acrylate urethane compound derived from a polypropylene glycol and a further polyol including a polyester polyol. These compositions may be used, once cured, as coating material for optical fibers and optical fiber ribbons, including primary coatings, secondary coatings, coloured secondary coatings, inks, matrix materials and bundling materials. In the introductory part, said document mentions that primary coatings should in particular have a very low Tg.

However, as noticed by the Applicant, although a primary coating has a relatively low value of Tg (as generally required by the art), the value of the modulus of the coating material may nevertheless begin to increase at temperatures much higher than the Tg, typically already above 0°C. Thus, while a low value of Tg simply implies that the transition of said coating from its rubbery to its glassy state takes place at relatively low temperatures, no information can be derived as to which would be the variation of the modulus upon temperature decrease. As a matter of fact, an excessive increase of the modulus of the primary coating may negatively affect the optical performances of the optical fiber, in particular at the low temperature values, thus causing undesirable attenuation of the transmitted signal due to microbending.

Thus, as observed by the applicant, what seems important for controlling the microbending of an optical fiber is the temperature at which the coating material begins the transition from its rubbery state (soft) to its glassy state (hard), which temperature will be referred in the following of this specification and claims as the "hardening temperature" of the material, of Th. In particular, attention should be paid t select a composition which still shows a relatively low modulus at said Th, so that an excessive increase of the modulus upon further temperature decrease can be avoided.

In the present description and claims, the term "modulus" is referred to the modulus of a polymeric material as determined by means of a DMA test in tension, as illustrated in detail in the test method section of the experimental part of the present specification.

In the present description and claims, the term "hardening temperature" is referred to the transition temperature at which the material shows an appreciable increase of its modulus (upon temperature decrease), thus indicating the beginning of an appreciable change from a relatively soft and flexible material (rubber-like material) into a relatively hard and brittle material (glass-like material). The mathematical determination of Th will be explained in detail in the following of the description.

According to the present invention, the Applicant has thus found that attenuation losses caused by microbending onto a coated optical fibers, particularly at the low exercise temperatures, can be reduced by suitably controlling the increase of the modulus at the low temperatures. In particular, the Applicant has found that said microbending losses can be reduced by using a polymeric material for the primary coating having a low hardening temperature and a comparatively low modulus at said temperature. In addition, the Applicant has found that by selecting coating compositions having a relatively low equilibrium modulus, said attenuation losses can be further controlled over the whole operating temperature range.

<u>Summary of the invention</u>

According to a first aspect, the present invention relates to a liquid radiation curable coating composition comprising 30-70 wt.% of a radiation curable urethane (meth)acrylate oligomer comprising a backbone derived from polypropylene glycol and a dimer acid based polyester polyol; 1-80 wt.% of at least one radiation curable diluent,

comprising a total amount of monofunctional reactive diluents of at least 15 wt.%; a photopolymerization initiator; an antioxidant; and a silane coupling agent, wherein said coating composition, when cured, has:

a) a hardening temperature (Th) of from -10 °C to -20 °C and a modulus measured at said Th of lower than 5.0 MPa; or
b) a Th of from -20 °C to -30 °C and a modulus measured at said Th of lower than 20.0 MPa; or
c) a Th of lower than -30 °C and a modulus measured at said Th of lower than 70.0 MPa.

Preferably said composition forming said coating layer has:

a) a Th of from -10 °C to -20 °C and a modulus measured at said Th of lower than 4.0 MPa; or
b) a Th of from -20 °C to -30 °C and a modulus measured at said Th of lower than 15.0 MPa; or
c) a Th of lower than -30 °C and a modulus measured at said Th of lower than 50.0 MPa.

Preferably, the equilibrium modulus of said composition, when cured, is lower than 1.5 MPa, more preferably lower than 1.4 MPa, much more preferably lower than 1.3 MPa.

According to a preferred embodiment, the glass transition temperature of the material is not higher than about -30 °C, more preferably not higher than -40 °C and much more preferably not higher than -50 °C.

Preferably, said composition, when disposed and cured as a first polymeric layer to surround a standard single mode optical fiber comprising an internal glass portion an when a second polymeric layer is disposed to surround said first polymeric layer, said optical fiber shows an increase in the attenuation of the transmitted signal at 1550 nm at a temperature of -30 °C of less than 1.5 (dB/km) (g/mm), more preferably of less than 1.2 (dB/km) (g/mm), even more preferred less than 1.0 (dB/km) (g/mm), and most preferred, less than 0.8 (dB/km) (g/mm), when subjected to the expandable drum test.

Preferably, a standard single optical fiber according to the invention shows a microbending sensitivity at 1550 nm at a temperature of -30 °C of less than 1.5 (dB/km) (g/mm) or more preferably of less than 1.2 (dB/km) (g/mm), even more preferred less than 1.0 (dB/km) (g/mm), and most preferred, less than 0.8 (dB/km) (g/mm), when subjected to the expandable drum microbending test.

The term standard single mode fiber refers herein to optical fibers having a refractive index profile of the step-index kind, i.e. a single segment profile, with a single variation of the refractive index of 0.2%-0.4%, a core radius of about 4.0-4.5 μm and a MAC value of about 7.8-8.6.

## Brief description of the drawings

Figure 1 shows a schematic cross-section of an optical fiber according to the invention;
Figure 2 shows an illustrative DMA plot of a polymeric material according to the invention;
Figure 3 shows the curve corresponding to the first derivative of the DMA plot of figure 2;
Figure 4a to 4c show the experimental DMA plots of three primary coating materials suitable according to the invention;
Figure 5 shows the experimental DMA plot of a prior art primary coating material.
Figure 6 shows an illustrative embodiment of a drawing tower for manufacturing an optical fiber according to the invention.

## Description of preferred embodiments

As shown in figure 1, an optical fiber according to the invention comprises an internal glass portion 101, a first polymeric coating layer 102, also known as primary coating, disposed to surround said glass portion and a second polymeric coating layer 103, also known as secondary coating, disposed to surround said first polymeric layer.

As mentioned above, an optical fiber according to the present invention comprises a primary coating layer formed from a polymeric material having a relatively low hardening temperature and a correspondingly low modulus at said temperature.

To better explain the meaning of the hardening temperature, reference is made to the curve shown in figure 2. This curve, typically obtained by a DMA (Dynamic Mechanical Analysis), represents the variation of the modulus of a polymeric material vs. temperature. As shown by this curve, the polymeric material has a relatively high value of modulus at the low temperatures (glassy state, portion "a" of the curve), while said value becomes much lower when the polymer is in its rubbery state, at the higher temperatures (portion "b" of the curve, equilibrium modulus). The oblique portion "d" of the curve represents the transition of the material from the glassy to the rubbery state. The transition between the glassy state and the rubbery state is known in the art as the "glass transition" of the material and is generally associated

to a specific temperature (Tg, glass transition temperature). As apparent from the curve , the transition between the glassy and the rubbery state takes place over a relatively wide range of temperatures. For apparent practical reasons, methods has thus been developed for determining a specific Tg value for each polymer. One of this methods (see for instance P.Haines, "Thermal Methods of Analysis", p. 133. Blackie Academic and professionals ed.), which is the one used for determining the Tg values indicated in the present description and claims, comprises determining the intersection point of two lines. The first line (identified as "A" in figure 2) is determined by interpolating the points of the DMA curve in the plateau region of the glassy state (portion "a" of the curve). In the practice, for primary coating compositions the interpolation is calculated for the points in the region from -60°C to -80°C. The second line (identified as "D" in figure 2) is determined as the tangent to the inflection point of the DMA curve in the oblique portion "d" of said curve. The inflection point and the inclination of the tangent in that point can be determined as usual by means of the first derivative of the DMA curve, as shown in figure 3. According to the curve shown in figure 3, the abscissa of the minimum point of the curve gives the respective abscissa of the inflection point on the DMA curve of figure 2, while the ordinate gives the inclination (angular coefficient) of the tangent line in said inflection point.

In practice, the derivative of each experimental point is first calculated and then the curve interpolating the derivative points is determined as known in the art. For avoiding unnecessary calculations, only those points falling within a relatively narrow temperature range around the minimum point are taken into account for the regression. Depending from the distribution of the experimental points, this range may vary between 40°C (about ±20°C around the minimum point) and 60°C (about ±20°C around the minimum point). A $6^{th}$ degree polynomial curve is considered in general sufficient to obtain an curve to fit with the derivative of the experimental points.

As shown in figure 2 the so determined glass transition temperature is of about -62°C.

Similarly to the Tg, also the hardening temperature (Th) of a polymeric material can be determined by the above method. The Th is thus determined as the intersection point between line "B" and the above defined line "D", as shown in figure 2. Line "B" is determined by interpolating the points of the DMA curve in the plateau region of the rubbery state (portion "b" of the curve) i.e. at the equilibrium modulus of the material. In the practice, for primary coating compositions the interpolation is calculated for the points in the region from 20°C and 40°C.

As shown in figure 2, the Th calculated according to the above method will thus be of about -13°C.

As observed by the Applicant, when the cured material forming the primary coating of the optical fiber has a Th lower than about -10°C and a modulus lower than 5.0 MPa, preferably lower than about 4.0 MPa, at said temperature, the optical performance of the optical fiber can be improved, particularly by reducing its microbending sensitivity, particularly at the low temperatures of exercise, e.g. below 0°C. As a matter of fact, the combination of these two parameters in a cured composition according to the invention applied as primary coating on an optical fiber results in a relatively smooth increase of the modulus upon temperature decrease, thus allowing to control the microbending phenomena down to the lower operating temperature limits, typically -30°C. As further observed by the Applicant, analogous control of the microbending phenomena can be achieved also when the composition when cured, has a Th lower than -20°C and a modulus at said temperature lower than 20 MPa, preferably lower than 15 MPa, or when the cured composition has a Th lower than -30°C and a modulus at said temperature lower than 70 MPa, preferably lower than 50 MPa.

The Applicant has further observed that if the equilibrium modulus of said primary coating is lower than about 1.5 MPa, preferably lower that about 1.4 MPa, more preferably lower than 1.3 MPa, the microbending sensitivity of the fiber can be further reduced, not only at the lower temperatures of the operating range, but also at higher temperatures, e.g. at the room temperature. Said modulus should however preferably be not lower than about 0.5 MPa more preferably not lower than 0.8 MPa, in order not to negatively affect other properties of the fiber.

Furthermore, the glass transition temperature of the composition of the present invention, after cure, which can be applied as primary coating on an optical fiber is preferably not higher than about -30°C, more preferably not higher than -40°C and much more preferably not higher than -50°C.

All the above indicated parameters, i.e. modulus, Th and Tg can be determined by subjecting a polymeric material to a DMA in tension performed according to the methodology illustrated in the experimental part of the present specification, and by evaluating the respective DMA plot of the material according to the above defined procedure.

Radiation-curable carrier systems which are suitable for forming a composition to be used as primary coating in an optical fiber according to the invention contain one or more radiation-curable oligomers or monomers (reactive diluents) having at least one functional group capable of polymerization when exposed to actinic radiation. Suitable radiation-curable oligomers or monomers are now well known and within the skill of the art. Commonly, the radiation-curable functionality used is ethylenic unsaturation, which can be polymerized preferably through radical polymerization. Preferably, at least about 80 mole %, more preferably, at least about 90 mole %, and most preferably substantially all of the radiation-curable functional groups present in the oligomer are acrylate or methacrylate. For the sake of simplicity, the term "acrylate" as used throughout the present application covers both acrylate and methacrylate functionality.

A radiation curable coating composition according to the present invention comprises 30-70 wt.% of a radiation curable urethane (meth)acrylate oligomer, said oligomer comprising a backbone derived from polypropylene glycol and a dimer acid based polyester polyol. Said radiation curable coating composition, when cued, may be used as a first

polymeric layer to surround an optical fiber comprising an internal glass portion, being denoted as a primary coating for an optical fiber. The oligomer is a urethane acrylate oligomer comprising said backbone, preferably a wholly aliphatic urethane acrylate oligomer.

The oligomer can be made according to methods that are well known in the art. Preferably, the urethane acrylate oligomer can be prepared by reacting

(A1) the polypropylene glycol, and
(A2) the dimer acid based polyester polyol,
(B) a polyisocyanate, and
(C) a (meth)acrylate containing a hydroxyl group.

Given as examples of the process for manufacturing the urethane acrylate by reacting these compounds are

(i) reacting said glycol (A1 and A2), the polyisocyanate, and the hydroxyl group-containing (meth)acrylate altogether; or
(ii) reacting said glycol and the polyisocyanate, and reacting the resulting product with the hydroxyl group-containing (meth)acrylate; or
(iii) reacting the polyisocyanate and the hydroxyl group-containing (meth)acrylate, and reacting the resulting product with said glycol; or
(iv) reacting the polyisocyanate and the hydroxyl group-containing (meth)acrylate, reacting the resulting product with said glycol, and reacting the hydroxyl group-containing (meth)acrylate once more.

Polypropylene glycol (A1) - as used herein - is understood to refer to a polypropylene glycol comprising composition having a plurality of polypropylene glycol moieties. Preferably, said polypropylene glycol has on average a number average molecular weight ranging from 1,000 to 13,000, more preferably ranging from 1,500 to 8,000, even more preferred from 2,000 to 6,000, and most preferred from 2,500 to 4,500. According to a preferred embodiment, the amount of unsaturation (referred to the meq/g unsaturation for the total composition) of said polypropylene glycol is less than 0.01 meq/g, more preferably between 0.0001 and 0.009 meq/g.

Polypropylene glycol includes 1,2-polypropylene glycol, 1,3-polypropylene glycol and mixtures thereof, with 1,2-polypropylene glycol being preferred. Suitable polypropylene glycols are commercially available under the trade names of, for example, Voranol P1010, P 2001 and P 3000 (supplied by Dow), Lupranol 1000 and 1100 (supplied by Elastogran), ACCLAIM 2200, 3201, 4200, 6300, 8200, and Desmophen 1111 BD, 1112 BD, 2061 BD, 2062 BD (all manufactured by Bayer), and the like. Such urethane compounds may be formed by any reaction technique suitable for such purpose.

Dimer acid based polyester polyol (A2) -as used herein- is understood to refer to a hydroxyl-terminated polyester polyol which has been made by polymerizing an acid-component and a hydroxyl-component and which has dimer acid residues in its structure, wherein said dimer acid residues are residues derived from the use of a dimer acid as at least part of the acid-component and/or by the use of the diol derivative of a dimer acid as at least part of the hydroxyl-component.

Dimer acids (and esters thereof) are a well known commercially available class of dicarboxylic acids (or esters). They are normally prepared by dimerizing unsaturated long chain aliphatic monocarboxylic acids, usually of 13 to 22 carbon atoms, or their esters (e.g. alkyl esters). The dimerization is thought by those in the art to proceed by possible mechanisms which include Diels-Alder, free radical, and carbonium ion mechanisms. The dimer acid material will usually contain 26 to 44 carbon atoms. Particularly, examples include dimer acids (or esters) derived from C-18 and C-22 unsaturated monocarboxylic acids (or esters) which will yield, respectively, C-36 and C-44 dimer acids (or esters). Dimer acids derived from C-18 unsaturated acids, which include acids such as linoleic and linolenic are particularly well known (yielding C-36 dimer acids).

The dimer acid products will normally also contain a proportion of trimer acids (e.g. C-54 acids when using C-18 starting acids), possibly even higher oligomers and also small amounts of the monomer acids. Several different grades of dimer acids are available from commercial sources and these differ from each other primarily in the amount of monobasic and trimer acid fractions and the degree of unsaturation.

Usually the dimer acid (or ester) products as initially formed are unsaturated which could possibly be detrimental to their oxidative stability by providing sites for crosslinking or degradation, and so resulting in changes in the physical properties of the coating films with time. It is therefore preferable (although not essential) to use dimer acid products which have been hydrogenated to remove a substantial proportion of the unreacted double bonds.

Herein the term "dimer acid" is used to collectively convey both the diacid material itself or ester-forming derivatives thereof (such as lower alkyl esters) which would act as an acid component in polyester synthesis and includes (if present) any trimer or monomer.

The dimer acid based polyester polyol preferably has on average a number average molecular weight ranging

from 1,000 to 13,000, more preferably ranging from 1,500 to 8,000, even more preferred from 2,000 to 6,000, and most preferred from 2,500 to 4,000.

Examples of these dimer acid based polyester polyols are given in EP 0 539 030 B1 which polyols are incorporated herein by reference. As commercially available products, Priplast 3190, 3191, 3192, 3195, 3196, 3197, 3198, 1838, 2033 (manufactured by Uniqema), and the like can be given.

The ratio of polypropylene glycol to dimer acid based polyester polyol in the oligomer may be ranging from 1:5 to 5:1, preferably ranging from 1:4 to 4:1, and more preferably ranging from 1:2 to 2:1, even more preferably, polypropylene glycol and dimer acid based polyester polyol are present in an equimolar ratio.

Given as examples of the polyisocyanate (B) are 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis (4-cyclohexylisocyanate), 2,2,4-trimethylhexamethylene diisocyanate, bis(2-isocyanatethyl)fumarate, 6-isopropyl-1,3-phenyl diisocyanate, 4-diphenylpropane diisocyanate, hydrogenated diphenylmethane diisocyanate, hydrogenated xylylene diisocyanate, tetramethyl xylylene diisocyanate, lysine isocyanate, and the like. These polyisocyanate compounds may be used either individually or in combinations of two or more. Preferred isocyanates are tolylene di-isocyanate, isophorone di-isocyanate, and methylene-bis (4-cyclohexylisocyanate). Most preferred are wholly aliphatic based polyisocyanate compounds, such as isophorone di-isocyanate, and methylene-bis (4-cyclohexylisocyanate).

Examples of the hydroxyl-group-containing acrylate (C) include, (meth)acrylate derived from (meth)acrylic acid and epoxy and (meth)acrylates comprising alkylene oxides, more in particular, 2-hydroxyethyl(meth)acrylate, 2-hydroxypropylacrylate and 2-hydroxy-3-oxyphenyl(meth)acrylate. Acrylate functional groups are preferred over methacrylates.

The ratio of the polyol (A) [said polyol (A) comprising (A1) and (A2)], the polyisocyanate (B), and the hydroxyl group-containing acrylate (C) used for preparing the urethane acrylate is determined so that 1.1 to 3 equivalents of an isocyanate group included in the polyisocyanate and 0.1 to 1.5 equivalents of a hydroxyl group included in the hydroxyl group-containing (meth)acrylate are used for one equivalent of the hydroxyl group included in the polyol.

The number average molecular weight of the urethane (meth)acrylate oligomer used in the composition of the present invention is preferably in the range from 1200 to 20,000, and more preferably from 2,200 to 10,000. If the number average molecular weight of the urethane (meth)acrylate is less than 100, the resin composition tends to solidify; on the other hand, if the number average molecular weight is larger than 20,000, the viscosity of the composition becomes high, making handling of the composition difficult.

The urethane (meth)acrylate oligomer is used in an amount from 30 to 70 wt.%, and preferably from 40 to 70 wt.% of the total amount of the resin composition.

A radiation-curable composition according to the invention also contains one or more reactive diluents (B) that are used to adjust the viscosity. The reactive diluent can be a low viscosity monomer having at least one functional group capable of polymerization when exposed to actinic radiation. This functional group may be of the same nature as that used in the radiation-curable oligomer. Preferably, the functional group of each reactive diluent is capable of copolymerizing wit the radiation-curable functional group present on the other radiation-curable diluents or oligomer. The reactive diluents used can be mono- and/or multifunctional, preferably (meth)acrylate functional.

The radiation-curable coating composition comprises from 1 to 80 wt.% of at least one radiation-curable diluent, comprising a total amount of monofunctional reactive diluents of at least 15 wt.%. Preferred amounts of the radiation-curable diluent include from about 10 to about 60 wt.%, more preferably from about 20 to about 55 wt.%, even more preferred ranging from 25 to 40 wt.%, based on the total weight of the coating composition.

Generally, each reactive diluent has a molecular weight of less than about 550 and a viscosity of less than about 500 mPa.s

For example, the reactive diluent can be a monomer or a mixture of monomers having an acrylate or vinyl ether functionality and a $C_4$-$C_{20}$ alkyl or polyether moiety. Examples of acrylate functional monofunctional diluents are acrylates containing an alicyclic structure such as isobornyl acrylate, bornyl acrylate, dicyclopentanyl acrylate, cyclohexyl acrylate, and the like, 2-hydroxyethyl acrylate, 2-hydroxypropyl acrylate, 2-hyroxybutyl acrylate, methyl acrylate, ethyl acrylate, propyl acrylate, isopropyl acrylate, butyl acrylate, amyl acrylate, isobutyl acrylate, t-butyl acrylate, pentyl acrylate, isoamyl acrylate, hexyl acrylate, heptyl acrylate, octyl acrylate, isooctyl acrylate, 2-ethylhexyl acrylate, nonyl acrylate, decyl acrylate, isodecyl acrylate, undecyl acrylate, dodecyl acrylate, lauryl acrylate, stearyl acrylate, isostearyl acrylate, tetrahydrofurfuryl acrylate, butoxyethyl acrylate, ethoxydiethylene glycol acrylate, benzylacrylate, phenoxyethylacrylate, polyethylene glycol monoacrylate, polypropylene glycol monoacrylate methoxyethylene glycol acrylate, ethoxyethyl acrylate, methoxypolyethylene glycol acrylate, methoxypropylene glycol acrylate, dimethylaminoethyl acrylate, diethylaminoethyl acrylate, 7-amino-3,7-dimethyloctyl acrylate, acrylate monomers shown by the following formula (1),

(1)

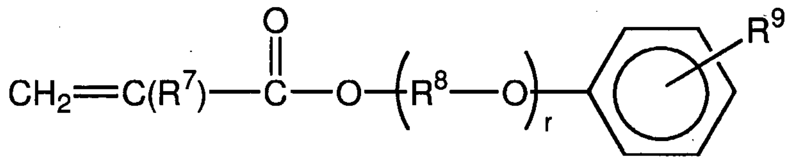

wherein $R^7$ is a hydrogen atom or a methyl group, $R^8$ is an alkylene group having 2-6, and preferably 2-4 carbon atoms, $R^9$ is a hydrogen atom or an organic group containing 1-12 carbon atoms or an aromatic ring, and r is an integer from 0 to 12, and preferably from 1 to 8.

Of these, in order to obtain a cured polymeric material having a suitably low hardening temperature and a suitably low modulus at said temperature, long aliphatic chain-substituted monoacrylates, such as, for example decyl acrylate, isodecyl acrylate, tridecyl acrylate, lauryl acrylate, and the like, are preferred and alkoxylated alkyl phenol acrylates, such as ethoxylated and propoxylated nonyl phenol acrylate are further preferred.

Examples of non-acrylate functional monomer diluents are N-vinylpyrrolidone, N-vinyl caprolactam, vinylimidazole, vinylpyridine, and the like. These N-vinyl monomers preferably are present in amounts between about 1 and about 20 % by weight, more preferably less than about 10 % by weight, even more preferred ranging from 2 to 7 % by weight.

According to a preferred embodiment, the radiation curable composition according to the invention comprises at least one monofunctional reactive diluent (having an acrylate or vinyl ether functionality), said monofunctional diluent (s) being present in an amount ranging from 20 to 40 wt.%, more preferably from 25 to 38 wt.%. The amount of monoacrylate functional reactive diluents preferably ranges from 10 to 40 wt.%, more preferably from 15 to 35 wt.% and most preferably from 20 to 30 wt.%.

The reactive diluent can also comprise a diluent having two or more functional groups capable of polymerization. Examples of such monomers include: $C_2$-$C_{18}$ hydrocarbondiol diacrylates, $C_4$-$C_{18}$ hydrocarbon divinylethers, $C_3$-$C_{18}$ hydrocarbon triacrylates, and the polyether analogues thereof, and the like, such as 1,6-hexanedioldiacrylate, trimethylolpropane triacrylate, hexanediol divinylether, triethyleneglycol diacrylate, pentaerythritol triacrylate, ethoxylated bisphenol-A diacrylate, and tripropyleneglycol diacrylate.

Such multifunctional reactive diluents are preferably (meth)acrylate functional, preferably difunctional (component (B1)) and trifunctional (component (B2)).

Preferably, alkoxylated aliphatic polyacrylates are used, such as ethoxylated hexanedioldiacrylate, propoxylated glyceryl triacrylate or propoxylated trimethylol propane triacrylate.

Preferred examples of diacrylates are alkoxylated aliphatic glycol diacrylates, more preferably, propoxylated aliphatic glycol diacrylate. A preferred example of a triacrylate is trimethylol propane triacrylate.

According to a preferred embodiment the radiation curable composition according to the invention which can be used as a primary coating on a optical fiber comprises, a multifunctional reactive diluent in amounts ranging from 0.5-10 wt.%, more preferably ranging from 1 to 5 wt.%, and most preferred from 1. 5 to 3 wt.%.

Without being bound to any particular theory, the present inventors believe that the combination of the oligomer according to the present invention in amounts of less than 70 wt.% with a total amount of monofunctional reactive diluents of at least 15 wt.% (more preferably, at least about 20 wt.%, even more preferably at least about 25 wt.% and most preferred at least about 30 wt.%) aids in achieving a primary coating composition, that after cure, has an acceptably low hardening temperature and low modulus at said temperature.

It is further preferred that the composition comprises a mixture of at least two monofunctional reactive diluents, more preferably, one of said reactive diluents being substituted with a long aliphatic chain; even more preferably, the composition contains two long aliphatic chain-substituted monoacrylates. Preferably, at least about 10 wt.%, more preferably at least about 12 wt.% is present of said at least one long aliphatic chain-substituted monoacrylate.

A liquid curable coating composition according to the present invention suitable to be applied as a primary coating layer on an optical fiber can be cured by radiation. Here, radiation includes infrared radiation, visible rays, ultraviolet radiation, X-rays, electron beams, $\alpha$-rays, $\beta$-rays, $\gamma$-rays, and the like. Visible and UV radiation are preferred.

The liquid curable resin composition according to the present invention comprises a photo-polymerization initiator. In addition, a photosensitizer can be added as required. Given as examples of the photopolymerization initiator are 1-hydroxycyclohexylphenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyldiphenylphosphine oxide, bis-(2,6-dimethoxybenzoyl)-2,4,4-trimethylpentylphosphine oxide, bis-(2,4,6-trimethylbenzoyl)-phenylphosphine oxide and the like.

Examples of commercially available products of the photo-polymerization initiator include IRGACURE 184, 369, 651, 500, 907, 1700, 1750, 1850, 819, Darocur I116, 1173 (manufactured by Ciba Specialty Chemicals Co., Ltd.), Lucirin LR8728 (manufactured by BASF), Ebecryl P36 (manufactured by UCB), and the like.

The amount of the polymerization initiator used can brange from 0.1 to 10 wt.%, and preferably from 0.5 to 7 wt.%, of the total amount of the components for the resin composition.

In addition to the above-described components the liquid radiation curable coating composition comprises an antioxidant and a silane coupling agent. Further, various additives such as UV absorbers, light stabilizers, coating surface improvers, heat polymerization inhibitors, leveling agents, surfactants, colorants, preservatives, plasticizers, lubricants, solvents, fillers, aging preventives, and wettability improvers can be used in the liquid curable resin composition of the present invention, as required. Examples of antioxidants include Irganox1010, 1035, 1076, 1222 (manufactured by Ciba Specialty Chemicals Co., Ltd.), Antigene P, 3C, FR, Sumilizer GA-80 (manufactured by Sumitomo Chemical Industries Co., Ltd.), and the like; examples of UV absorbers include Tinuvin P, 234, 320, 326, 327, 328, 329, 213 (manufactured by Ciba Specialty Chemicals Co., Ltd.), Seesorb 102, 103, 110, 501, 202, 712, 704 (manufactured by Sypro Chemical Co., Ltd.), and the like; examples of light stabilizers include Tinuvin 292, 144, 622LD (manufactured by Ciba Specialty Chemicals Co., Ltd.), Sanol LS770 (manufactured by Sankyo Co., Ltd.), Sumisorb TM-061 (manufactured by Sumitomo Chemical Industries Co., Ltd.), and the like; examples of silane coupling agents include aminopropyltriethoxysilane, mercaptopropyltrimethoxy-silane, and metacryloxypropyltrimethoxysilane, and commercially available products such as SH6062, SH6030 (manufactured by Toray-Dow Corning Silicone Co., Ltd.), and KBE903, KBE603, KBE403 (manufactured by Shin-Etsu Chemical Co., Ltd.). The viscosity of the liquid curable coating composition according to the present invention which can be applied as a primary coating layer on an optical fiber is usually in the range from 200 to 20,000 cP, and preferably from 2,000 to 15,000 cP.

The primary coating compositions according to the present invention, when cured, typically have an elongation-at-break of greater than 80 %, more preferably of at least 110 %, more preferably at least 150 % but not typically higher than 400%.

The compositions according to the present invention will preferably have a cure speed of 1.0 $J/cm^2$ (at 95% of maximum attainable modulus) or less, more preferably about 0.7 $J/cm^2$ or less, and more preferably, about 0.5 $J/cm^2$ or less, and most preferred, about 0.4 $J/cm^2$ or less.

A radiation curable coating composition according to the present invention is preferably disposed and cured as a first polymeric layer to surround an optical fiber (referred to as "primary coating") and a second polymeric layer is preferably disposed and cured to surround said first polymeric layer (referred to as "secondary layer"). Preferably, said secondary coating is also based on a radiation curable composition.

The aforedescribed primary coating is then in turn coated with a secondary coating, of a type known in the art, compatible with the primary coating formulation. For example, if the primary coating has an acrylic base, the secondary coating will also preferably have an acrylic base.

Typically, an acrylic based secondary coating comprises at least one oligomer with acrylate or methacrylate terminal groups, at least one acrylic diluent monomer and at least one photoinitiator.

The oligomer represents generally 40-80% of the formulation by weight. The oligomer commonly consists of a polyurethaneacrylate.

The polyurethaneacrylate is prepared by reaction between a polyol structure, a polyisocyanate and a monomer carrying the acrylic function.

The molecular weight of the polyol structure is indicatively between 500 and 6000 u.a.; it can be entirely of hydrocarbon, polyether, polyester, polysiloxane or fluorinated type, or be a combination thereof. The hydrocarbon and polyether structure and their combinations are preferred. A structure representative of a polyether polyol can be, for example, polytetramethylene oxide, polymethyltetramethylene oxide, polymethylene oxide, polypropylene oxide, polybutylene oxide, their isomers and their mixtures. Structures representative of a hydrocarbon polyol are polybutadiene or polyisobutylene, completely or partly hydrogenated and functionalized with hydroxyl groups.

The polyisocyanate can be of aromatic or aliphatic type, such as those polyisocyanates illustrated previously. The monomer carrying the acrylic function comprises groups able to react with the isocyanic group; such as the hydroxyl group-containing acrylates as illustrated previously.

The epoxyacrylate is prepared by reacting the acrylic acid with a glycidylether of an alcohol, typically bisphenol A or bisphenol F.

The diluent monomer represents 20-50% of the formulation by weight, its main purpose being to cause the formulation to attain a viscosity of about 5 Pas at the secondary coating application temperature. The diluent monomer, carrying the reactive function, preferably of acrylic type, has a structure compatible with that of the oligomer. The acrylic function is preferred. The diluent monomer can contain an alkyl structure, such as isobornylacrylate, hexanediacrylate, dicyclopentadiene-acrylate, trimethylolpropane-triacrylate, or aromatic such as nonylphenyletheracrylate, polyethyleneglycol-phenyletheracry-late and acrylic derivatives of bisphenol A.

Examples of photoinitiator(s) and further additive(s) that may be used in the secondary coating composition are as illustrated previously.

A typical formulation of a cross-linkable system for secondary coatings comprises about 40-70% of polyurethaneacrylate, epoxyacrylate or their mixtures, about 30-50% of diluent monomer, about 1-5% of photoinitiator and about 0.5-5% of other additives.

An example of a formulation usable as the secondary coating of the invention is that marketed under the name of DeSolite® 3471-2-136 (DSM). The fibres obtained thereby can be used either as such within optical cables, or can be combined, for example in ribbon form, by incorporation into a common polymer coating, of a type known in the art (such as Cablelite® 3287-9-53, DSM), to be then used to form an optical cable.

Typically, the polymeric material forming the secondary coating has a modulus E' at 25°C of from about 1000 MPa to about 2000 MPa and a glass transition temperature (measured as above defined) higher than about 30°C, preferably higher than 40°C and more preferably higher than about 50°C.

An optical fiber comprising a primary coating comprising a cured composition according to the present invention may be produced according to the usual drawing techniques, using, for example, a system such as the one schematically illustrated in Figure 6.

This system, commonly known as "drawing tower", typically comprises a furnace (302) inside which a glass optical preform to be drawn is placed. The bottom part of the said preform is heated to the softening point and drawn into an optical fiber (301). The fiber is then cooled, preferably to a temperature of at least 60°C, preferably in a suitable cooling tube (303) of the type described, for example, in patent application WO 99/26891, and passed through a diameter measurement device (304). This device is connected by means of a microprocessor (313) to a pulley (310) which regulates the spinning speed; in the event of any variation in the diameter of the fiber, the microprocessor (313) acts to regulate the rotational speed of the pulley (310), so as to keep the diameter of the optical fiber constant. Then, the fiber passes through a primary coating applicator (305), containing the coating composition in liquid form, and is covered with this composition to a thickness of about 25 $\mu$m-35 $\mu$m. The coated fiber is then passed through a UV oven (or a series of ovens) (306) in which the primary coating is cured. The fiber coated with the cured primary coating is then passed through a second applicator (307), in which it is coated with the secondary coating and then cured in the relative UV oven (or series of ovens) (308). Alternatively, the application of the secondary coating may be carried out directly on the primary coating before the latter has been cured, according to the "wet-on-wet" technique. In this case, a single applicator is used, which allows the sequential application of the two coating layers, for example, of the type described in patent US 4 474 830. The fiber thus covered is then cured using one or more UV ovens similar to those used to cure the individual coatings.

Subsequent to the coating and to the curing of this coating, the fiber may optionally be caused to pass through a device capable of giving a predetermined torsion to this fiber, for example of the type described in international patent application WO 99/67180, for the purpose of reducing the PMD ("Polarization Mode Dispersion") value of this fiber. The pulley (310) placed downstream of the devices illustrated previously controls the spinning speed of the fiber. After this drawing pulley, the fiber passes through a device (311) capable of controlling the tension of the fiber, of the type described, for example, in patent application EP 1 112 979, and is finally collected on a reel (312).

An optical fiber thus produced may be used in the production of optical cables. The fiber may be used either as such or in the form of ribbons comprising several fibers combined together by means of a common coating.

Examples

The present invention will be explained in more detail below by way of examples, which are not intended to be limiting of the present invention.

Coating compositions

Coating compositions have been prepared to be applied as primary coating on optical fibers. The compositions to be applied as a primary coating on an optical fiber according to the invention are indicated as the examples Ex.1, Ex. 2 and Ex.3 in the following Table 1.

Table 1: Radiation curable primary coating compositions

| | Ex. 1 (Wt. %) | Ex. 2 (Wt. %) | Ex. 3 (Wt.%) |
|---|---|---|---|
| Oligomer I | 68.30 | 60.30 | 67.30 |
| Ethoxylated nonyl phenol acrylate | 10.00 | 19.00 | 10.00 |
| Tridecyl acrylate | 10.00 | 10.00 | 10.00 |

(continued)

| | Ex. 1 (Wt. %) | Ex. 2 (Wt. %) | Ex. 3 (Wt.%) |
|---|---|---|---|
| Long aliphatic chain-substituted monoacrylate | 2.00 | 2.00 | 2.00 |
| Vinyl caprolactam | 5.00 | 6.00 | 5.00 |
| Ethoxylated bisphenol A diacrylate | 1.00 | - | 3.00 |
| Trimethylol propane triacrylate (TMPTA) | 1.00 | - | - |
| 2,4,6-trimethylbenzoyl diphenyl phosphine oxide | 1.40 | 1.40 | 1.40 |
| Thiodiethylene bis [3-(3,5-di-tert-butyl-4-hydroxyphenyl) propionate]) hydrocinnamate | 0.30 | 0.30 | 0.30 |
| γ-mercapto propyl trimethoxysilane | 1.00 | 1.00 | 1.00 |

Oligomer I is the reaction product of isophorone diisocyanate (IPDI), 2-hydroxyethylacrylate (HEA), polypropylene glycol (PPG) and a dimer acid based polyester polyol.

In addition, comparative commercial primary coating DeSolite® 3471-1-129 (as Comparative Experiment, Comp. Exp. A in table 2) has also been tested.

The equilibrium modulus, the Tg, the Th and the modulus at the Th for each of the above cured primary coating compositions were as given in Table 2 (see test method section for details on DMA test and determination of respective parameters on the DMA curve). The corresponding DMA curves of said cured coating compositions are reported in figs. 4A to 4C, respectively.

<u>TABLE 2: Parameters of cured primary coating compositions</u>

| | **Tg** | **Th** | **E'** | **E' (Th)** |
|---|---|---|---|---|
| **Ex.1** | -59.1 | -12.2 | 1.1 | 3.5 |
| **Ex. 2** | -56.6 | -10.8 | 0.7 | 2.0 |
| **Ex. 3** | -63.2 | -13.3 | 1.1 | 2.7 |
| **Comp. Exp. A** | -55.1 | -5.6 | 1.9 | 3.6 |

<u>Preparation of optical fibers</u>

Coated standard single mode optical fibers have been manufactured as indicated in the test method section, by using the primary coating compositions of Examples 1-3 (fibers F-1, F-1a, F-2 and F-3) or of Comparative Experiment A (fiber F-C) as the primary coating, together with the commercial secondary coating DeSolite® 3471-2-136.

The single mode optical fibers that have been manufactured are given in Table 3 below.

<u>Table 3: Single mode optical fibers</u>

| **Fiber** | **Primary coating** | **MAC** |
|---|---|---|
| F-1 | Ex. 1 | 8.0 |
| F-1a | Ex. 1 | 7.9 |
| F-2 | Ex. 2 | 7.9 |
| F-3 | Ex. 3 | 8.35 |
| F-C | Comp. Exp. A | 8.23 |

The MAC value for each fiber is determined as indicated in the test method section.

<u>Microbending tests</u>

The results of the microbending test (see details in the test methods section) on single mode optical fibers are reported in the following table 4.

Table 4: Microbending on SM fibers

| | | Microbending Sensitivity (dB/Km)/(g/mm) | | |
|---|---|---|---|---|
| **Fiber** | **MAC** | **-30°C** | **+22°C** | **+60°C** |
| F-1 | 8.00 | 0.75 | 0.4 | 1.6 |
| F1a | 7.91 | 0.45 | 0.31 | 1.5 |
| F-2 | 7.9 | 0.4 | 0.2 | 1.3 |
| F-3 | 8.35 | 0.5 | 0.3 | 1.6 |
| F-C | 8.23 | 1.6 | 1.4 | 2.6 |

As shown by the above results, an optical fiber comprising a cured coating composition according to the invention is less prone to attenuation losses caused by the microbending phenomenon, both at the low as well as high operating temperatures.

Test methods and methods of manufacturing

Curing of the primary coatings for mechanical testing (sample preparation)

A drawdown of the material to be tested was made on a glass plate and cured using a UV processor in inert atmosphere (with a UV dose of 1 J/cm$^2$, Fusion D-lamp measured with EIT Uvicure or International Light IL 390 B Radiometer). The cured film was conditioned at 23±2 °C and 50±5 % RH for a minimum of 16 hours prior to testing.

A minimum of 6 test specimens having a width of 12.7 mm and a length of 12.5 cm were cut from the cured film.

Dynamic Mechanical Testing

The DMTA testing has been carried out in tension according to the following methodology.
Test samples of the cured coating compositions of examples 1-3 and of comparative experiment A were measured using a Rheometrics Solids Analyzer (RSA-11), equipped with:

1) a personal computer having a Windows operating system and having RSI Orchestrator® software (Version V. 6.4.1) loaded, and
2) a liquid nitrogen controller system for low-temperature operation.

The test samples were prepared by casting a film of the material, having a thickness in the range of 0.02 mm to 0.4 mm, on a glass plate. The sample film was cured using a UV processor. A specimen approximately 35 mm (1.4 inches) long and approximately 12 mm wide was cut from a defect-free region of the cured film. For soft films, which tend to have sticky surfaces, a cotton-tipped applicator was used to coat the cut specimen with talc powder.

The film thickness of the specimen was measured at five or more locations along the length. The average film thickness was calculated to ±0.001 mm. The thickness cannot vary by more than 0.01 mm over this length. Another specimen was taken if this condition was not met. The width of the specimen was measured at two or more locations and the average value calculated to ± 0.1 mm.

The geometry of the sample was entered into the instrument. The length field was set at a value of 23.2 mm and the measured values of width and thickness of the sample specimen were entered into the appropriate fields.

Before conducting the temperature sweep, moisture was removed from the test samples by subjecting the test samples to a temperature of 80°C in a nitrogen atmosphere for 5 minutes. The temperature sweep used included cooling the test samples to about -60°C or about -90°C and increasing the temperature at about 2°C/minute until the temperature reached about 100°C to about 120°C. The test frequency used was 1.0 radian/second. In a DMTA measurement, which is a dynamic measurement, the following moduli are measured: the storage modulus (also referred to as elastic modulus) E', and the loss modulus (also referred to as the viscous modulus) E". The lowest value of the storage modulus E' in the DMTA curve in the temperature range between 10 and 100 °C measured at a frequency of 1.0 radian/second under the conditions as described in detail above is taken as the equilibrium modulus of the coating.

The corresponding DMA curves are reported in figs. 4a to 4c (examples 1-3 respectively) and figure 5 (comp. Exp. A).

Determination of Glass transition temperature (Tg) and Gardening temperature (Th)

Based on the respective DMA plot of each cured primary coating material, the Tg, Th and modulus at Th of the material have been determined as mentioned in the descriptive part.

Thus, with ref. to figure 2, the Tg is determined by the intersection point of line A with line D. Line A is determined by interpolating the points of the DMA curve in the plateau region of the glassy statein the following manner. First of all, the median value of logE' in the region from -60°C to -80°C is calculated. Line A is then determined as the horizontal line (parallel to the x axis) passing through said value of LogE'. Line D is determined as the tangent to the inflection point of the DMA curve in the oblique portion "d" of said curve. The inflection point and the inclination of the tangent in that point are determined by means of the first derivative of the DMA curve; the abscissa of the minimum point of the derivative curve gives the respective abscissa of the inflection point on the DMA curve, while the ordinate gives the inclination (angular coefficient) of the tangent line in said inflection point. The derivative curve has been determined by calculating the derivative of each experimental point of the DMA curve and then fitting these points by means of a $6^{th}$ degree polynomial curve in the range +20/- 40°C around the minimum calculated derivative points.

Similarly, also the Th has been determined as the intersection point of line B with line D (see figure 2). Line D is as above determined, while line B is determined by interpolating the points of the DMA curve in the plateau region of the rubbery state in the following manner. First of all, the median value of logE' in the region from 20°C to 40°C is calculated. Line B is then determined as the horizontal line (parallel to the x axis) passing through said median value of LogE'.

Manufacturing of optical fibers

All the optical fibers used in the present experimental section have been manufactured according to standard drawing techniques, by applying a first (primary) coating composition on the drawn optical fiber, curing said coating composition and subsequently applying the secondary coating layer and curing it. The fiber is drawn at a speed of about 20 m/s and the cure degree of the coating layers is of at least 90%. The cure degree is determined by means of MICRO-FTIR technique, by determining the amount of the reacted acrylate unsaturations (in terms of % RAU) in the final cross-linked resin with respect to the initial photo-curable composition, e.g. as described in WO 98/50317.

Microbending tests

Microbending effects on optical fibers were determined by the "expandable drum method" as described, for example, in G. Grasso and F. Meli "Microbending losses of cabled single-mode fibers", ECOC '88, pp. 526-ff or as defined by IEC standard 62221 (optical fibers measurement methods - microbending sensitivity - method A, expandable drum published October 2002). The test is performed by winding a 100 m length fiber with a tension of 55 g on a 300 mm diameter expandable metallic bobbin, coated with rough material (3M Imperial® PSA-grade 40 μm).

The bobbin is connected with a personal computer which controls:

the expansion of the bobbin (in terms of variation of fiber length); and
the fiber transmission loss.

The bobbin is then gradually expanded while monitoring fiber transmission loss versus fiber strain.

The pressure exerted onto the fiber is calculated from the fiber elongation by the following formula:

$$p = \frac{EA\varepsilon}{R}$$

where E is the elastic modulus of glass, A the area of the coated fiber and R the bobbin radius.

For each optical fiber, the MAC has been determined as follows:

$$MAC = \frac{MFD}{\lambda_{co}}$$

where MFD (mode field diameter according Petermann definition) at 1550 nm is determined according to standard ITUT G650 and $\lambda_{co}$ (lambda fiber cutoff - 2 m lenght) is determined according to standard ITUT G650.

## Claims

**1.** Liquid radiation curable coating composition comprising

- 30-70 wt.% of a radiation curable urethane (meth)acrylate oligomer comprising a backbone derived from polypropylene glycol and a dimer acid based polyester polyol;
- 1-80 wt.% of at least one radiation curable diluent, comprising a total amount of monofunctional reactive diluents of at least 15 wt.%;
- a photo-polymerization initiator;
- an antioxidant; and
- a silane coupling agent,

and wherein said coating composition, when cured, has:

a) a hardening temperature (Th) of from -10 °C to -20 °C and a modulus measured at said Th of lower than 5.0 MPa; or
b) a hardening temperature (Th) of from -20 °C to -30 °C and a modulus measured at said Th of lower than 20.0 MPa; or
c) a hardening temperature (Th) of lower than -30 °C and a modulus measured at said Th of lower than 70.0 MPa.

**2.** Coating composition according to claim 1, said composition having:

a) a hardening temperature (Th) of from -10 °C to -20 °C and a modulus measured at said Th of lower than 4.0 MPa; or
b) a hardening temperature (Th) of from -20 °C to -30 °C and a modulus measured at said Th of lower than 15.0 MPa; or
c) a hardening temperature (Th) of lower than -30 °C and a modulus measured at said Th of lower than 50.0 MPa.

**3.** Coating composition according to any one of claims 1-2, wherein the equilibrium modulus of said composition, when cured, is lower than 1.5 MPa, preferably lower than 1.4 MPa, more preferably lower than 1.3 MPa.

**4.** Coating composition according to any of one the preceding claims, wherein the glass transition temperature of said composition, when cured, is not higher than - 30 °C, preferably not higher than -40 °C, more preferably not higher than -50 °C.

**5.** Coating composition according to claim 1, wherein the monofunctional reactive diluents comprise one or more selected from the group consisting of decyl acrylate, isodecyl acrylate, tridecyl acrylate, lauryl acrylate, and alkoxylated alkyl phenol acrylates.

**6.** Cured coating for an optical fiber primary coating comprising a radiation curable coating composition according to any one of claims 1-4, after cure.

**7.** Coating composition system, said system comprising a primary coating composition and a secondary coating composition for use as an optical fiber dual coating system, wherein the primary coating composition is a composition according to any one of claims 1-4.

**8.** Use of a composition according to any one of claims 1-4 as a composition for a primary optical fiber coating.

**9.** Use of a composition system according to claim 7 as a dual coating system for an optical fiber.

**10.** Use according to any one of claims 8-9, wherein the optical fiber is a single mode optical fiber.

**11.** Method for formulating a radiation curable coating composition comprising:

mixing together at least

- 30-70 wt.% of a radiation curable urethane (meth)acrylate oligomer comprising a backbone derived from polypropylene glycol and a dimer acid based polyester polyol;

- 1-80 wt.% of at least one radiation curable diluent
- a photo-polymerization initiator;
- an antioxidant; and
- a silane coupling agent,

the total amount of monofunctional reactive diluents being at least 15 wt.%,
wherein said mixing is such that said composition, when cured, has:

a) a hardening temperature (Th) of from -10 °C to -20 °C and a modulus measured at said Th of lower than 5.0 MPa; or
b) a hardening temperature (Th) of from -20 °C to -30 °C and a modulus measured at said Th of lower than 20.0 MPa; or
c) a hardening temperature (Th) of lower than -30 °C and a modulus measured at said Th of lower than 70.0 MPa.

**12.** Method for making a cured primary coating for an optical fiber comprising:

i) formulating a radiation curable coating composition according to claim 14, and
ii) curing said composition with ultraviolet light.

**Patentansprüche**

**1.** Flüssige, strahlungshärtbare Beschichtungszusammensetzung, umfassend

- 30-70 Gew.-% eines strahlungshärtbaren Urethan(meth)acrylat-Oligomers, umfassend ein Rückgrat, abgeleitet von Polypropylenglycol und einem auf Dimer-Säure basierendem Polyesterpolyol;
- 1-80 Gew.-% von mindestens einem strahlungshärtbaren Verdünner, umfassend eine Gesamtmenge von mindestens 15 Gew.-% an monofunktionellen, reaktiven Verdünnern;
- einen Photopolymerisationsinitiator;
- ein Antixoxidans; und
- ein Silan-Kopplungsmittel,
und wobei die Beschichtungszusammensetzung, wenn sie gehärtet ist, aufweist:

a) eine Härtungstemperatur (Th) von -10°C bis -20°C und einen Modul, gemessen bei der Th, von weniger als 5,0 MPa; oder
b) eine Härtungstemperatur (Th) von -20°C bis -30°C und einen Modul, gemessen bei der Th, von weniger als 20,0 MPa; oder
c) eine Härtungstemperatur (Th) von weniger als -30°C und einen Modul, gemessen bei der Th, von weniger als 70,0 MPa.

**2.** Beschichtungszusammensetzung nach Anspruch 1, wobei die Zusammensetzung aufweist:

a) eine Härtungstemperatur (Th) von -10°C bis -20°C und einen Modul, gemessen bei der Th, von weniger als 4,0 MPa; oder
b) eine Härtungstemperatur (Th) von -20°C bis -30°C und einen Modul, gemessen bei der Th, von weniger als 15,0 MPa; oder
c) eine Härtungstemperatur (Th) von weniger als -30°C und einen Modul, gemessen bei der Th, von weniger als 50,0 MPa.

**3.** Beschichtung nach einem der Ansprüche 1-2, wobei der Gleichgewichtsmodul der Zusammensetzung, wenn sie gehärtet ist, niedriger als 1,5 MPa, bevorzugt niedriger als 1,4 MPa, bevorzugter niedriger als 1,3 MPa, ist.

**4.** Beschichtungszusammensetzung nach einem der vorhergehenden Ansprüche, wobei die Glasübergangstemperatur der Zusammensetzung, wenn sie gehärtet ist, nicht höher als -30°C, bevorzugt nicht höher als -40°C, bevorzugter nicht höher als -50°C, ist.

**5.** Beschichtungszusammensetzung nach Anspruch 1, wobei die monofunktionellen, reaktiven Verdünner eines oder

mehr, ausgewählt aus der Gruppe bestehend aus Decylacrylat, Isodecylacrylat, Tridecylacrylat, Laurylacrylat und alkoxylierten Alkylphenolacrylaten, umfassen.

**6.** Gehärtete Beschichtung für eine Primärbeschichtung einer optischen Faser, umfassend eine strahlungshärtbare Beschichtungszusammensetzung nach einem der Ansprüche 1-4, nach dem Härten.

**7.** Beschichtungszusammensetzungssystem, wobei das System eine primäre Beschichtungszusammensetzung und eine sekundäre Beschichtungszusammensetzung zur Verwendung als ein Doppelbeschichtungssystem für optische Fasern umfasst, wobei die primäre Beschichtungszusammensetzung eine Zusammensetzung nach einem der Ansprüche 1-4 ist.

**8.** Verwendung einer Zusammensetzung nach einem der Ansprüche 1-4 als eine Zusammensetzung für eine primäre Beschichtung für optische Fasern.

**9.** Verwendung einer Zusammensetzung nach Anspruch 7 als ein Doppelbeschichtungssystem für eine optische Faser.

**10.** Verwendung nach einem der Ansprüche 8-9, wobei die optische Faser eine optische Einzelmodus-Faser ist.

**11.** Verfahren zur Formulierung einer strahlungshärtbaren Beschichtungszusammensetzung, umfassend:

das Zusammenmischen von mindestens

- 30-70 Gew.-% eines strahlungshärtbaren Urethan(meth)acrylat-Oligomers, umfassend ein Rückgrat, abgeleitet von Polypropylenglycol und einem auf Dimer-Säure basierenden Polyesterpolyol;
- 1-80 Gew.-% von mindestens einem strahlungshärtbaren Verdünner;
- einen Photopolymerisationsinitiator;
- ein Antixoxidans; und
- ein Silan-Kopplungsmittel,

wobei die Gesamtmenge an monofunktionellen, reaktiven Verdünnern mindestens 15 Gew.-% beträgt, wobei die Mischung so ist, dass die Zusammensetzung, wenn sie gehärtet ist, aufweist:

a) eine Härtungstemperatur (Th) von -10°C bis -20°C und einen Modul, gemessen bei der Th, von weniger als 5,0 MPa; oder
b) eine Härtungstemperatur (Th) von -20°C bis -30°C und einen Modul, gemessen bei der Th, von weniger als 20,0 MPa; oder
c) eine Härtungstemperatur (Th) von weniger als -30°C und einen Modul, gemessen bei der Th, von weniger als 70,0 MPa.

**12.** Verfahren zur Herstellung einer gehärteten Primärbeschichtung für eine optische Faser, umfassend:

i) Formulieren einer strahlungshärtbaren Beschichtungszusammensetzung nach Anspruch 14 und
ii) Härten der Zusammensetzung mit ultraviolettem Licht.

## Revendications

**1.** Composition de revêtement durcissable par rayonnement liquide comprenant

- de 30 à 70 % en poids d'un oligomère de (méth)acrylate d'uréthane durcissable par rayonnement comprenant un squelette dérivé du polypropylène glycol et un polyester polyol à base d'acide dimére ;
- de 1 à 80 % en poids d'au moins un diluant durcissable par rayonnement, comprenant une quantité totale de diluants réactifs monofonctionnels d'au moins 15 % en poids ;
- un initiateur de photopolymérisation ;
- un antioxydant ; et
- un agent de couplage au silane,

et dans laquelle ladite composition de revêtement, lorsqu'elle est durcie, a :

a) une température de durcissement (Th) de -10 °C à -20 °C et un module mesuré à ladite Th inférieur à 5,0 MPa ; ou
b) une température de durcissement (Th) de -20 °C à -30 °C et un module mesuré à ladite Th inférieur à 20,0 MPa ; ou
c) une température de durcissement (Th) inférieur à -30 °C et un module mesuré à ladite Th inférieur à 70,0 MPa.

**2.** Composition de revêtement selon la revendication 1, ladite composition ayant :

a) une température de durcissement (Th) de -10 °C à -20 °C et un module mesuré à ladite Th inférieur à 4,0 MPa ; ou
b) une température de durcissement (Th) de -20 °C à -30 °C et un module mesuré à ladite Th inférieur à 15,0 MPa ; ou
c) une température de durcissement (Th) inférieur à -30 °C et un module mesuré à ladite Th inférieur à 50,0 MPa.

**3.** Composition de revêtement selon l'une quelconque des revendications 1 à 2, dans laquelle le module d'équilibre de ladite composition, lorsqu'elle est durcie, est inférieur à 1,5 MPa, de préférence inférieur à 1,4 MPa, plus préférablement inférieur à 1,3 MPa.

**4.** Composition de revêtement selon l'une quelconque des revendications précédentes, dans laquelle la température de transition vitreuse de ladite composition, lorsqu'elle est durcie, n'est pas supérieure à -30 °C, de préférence pas supérieure à -40 °C, plus préférablement pas supérieure à -50 °C.

**5.** Composition de revêtement selon la revendication 1, dans laquelle les diluants réactifs monofonctionnels comprennent un ou plusieurs éléments choisis dans le groupe constitué de l'acrylate de décyle, de l'acrylate d'isodécyle, de l'acrylate de
tridécyle, de l'acrylate de lauryle et des acrylates d'alkylphénol alcoxylé.

**6.** Revêtement durci pour un revêtement primaire de fibres optiques comprenant une composition de revêtement durcissable par rayonnement selon l'une quelconque des
revendications 1 à 4, après durcissement.

**7.** Système de compositions de revêtement, ledit système comprenant une composition de revêtement primaire et une composition de revêtement secondaire pour utilisation en tant que système de double revêtement de fibres optiques, dans lequel la composition de revêtement primaire est une composition selon l'une quelconque des revendications 1 à 4.

**8.** Utilisation d'une composition selon l'une quelconque des revendications 1 à 4 en tant que composition pour un revêtement primaire de fibres optiques.

**9.** Utilisation d'un système de compositions selon la revendication 7 en tant que système de double revêtement pour une fibre optique.

**10.** Utilisation selon l'une quelconque des revendications 8 à 9, dans laquelle la fibre optique est une fibre optique monomode.

**11.** Procédé de formulation d'une composition de revêtement durcissable par rayonnement comprenant : le mélange d'au moins

- de 30 à 70 % en poids d'un oligomère de (méth)acrylate d'uréthane durcissable par rayonnement comprenant un squelette dérivé du polypropylène glycol et un polyester polyol à base d'acide dimère ;
- de 1 à 80 % en poids d'au moins un diluant durcissable par rayonnement
- un initiateur de photopolymérisation ;
- un antioxydant ; et
- un agent de couplage au silane,

la quantité totale des diluants réactifs monofonctionnels étant d'au moins 15 % en poids,
dans lequel ledit mélange est tel que ladite composition, lorsqu'elle est durcie, a :

a) une température de durcissement (Th) de -10 °C à -20 °C et un module mesuré à ladite Th inférieur à 5,0 MPa ; ou
b) une température de durcissement (Th) de -20 °C à -30 °C et un module mesuré à ladite Th inférieur à 20,0 MPa ; ou
c) une température de durcissement (Th) inférieur à -30 °C et un module mesuré à ladite Th inférieur à 70,0 MPa.

**12.** Procédé de préparation d'un revêtement primaire durci pour une fibre optique comprenant :

i) la formulation d'une composition de revêtement durcissable par rayonnement selon la revendication 14, et
ii) le durcissement de ladite composition à l'aide d'une lumière ultraviolette.

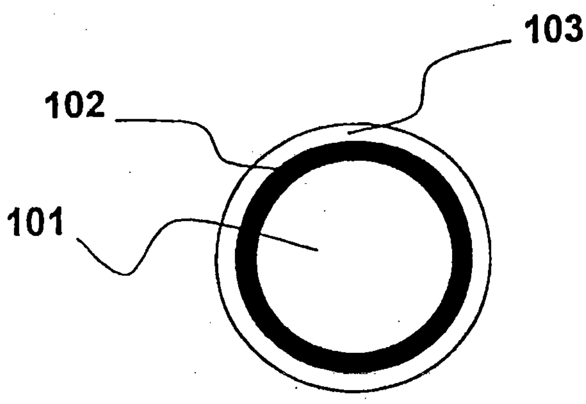


Fig. 1

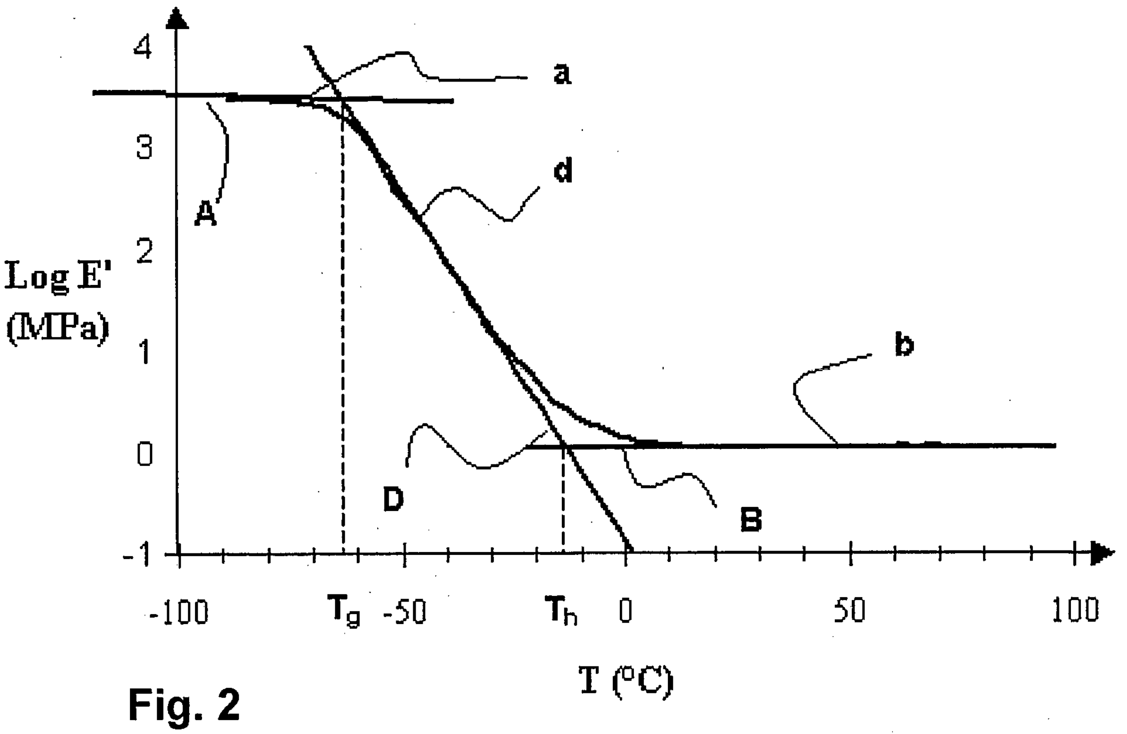

Log E' (MPa)
4
3
2
1
0
-1
a
A
d
b
D
B
-100
Tg
-50
Th
0
50
100
T (°C)


Fig. 2

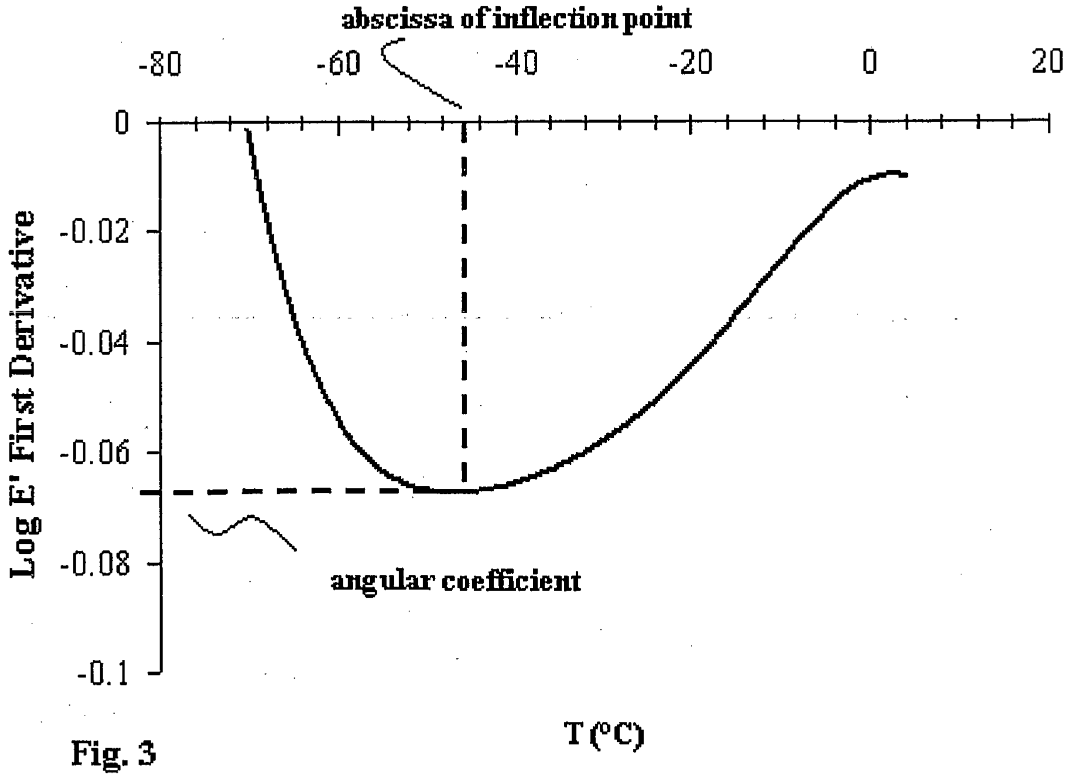

abscissa of inflection point
-80
-60
-40
-20
0
20
0
-0.02
-0.04
-0.06
-0.08
-0.1
Log E' First Derivative
angular coefficient
T (°C)


Fig. 3

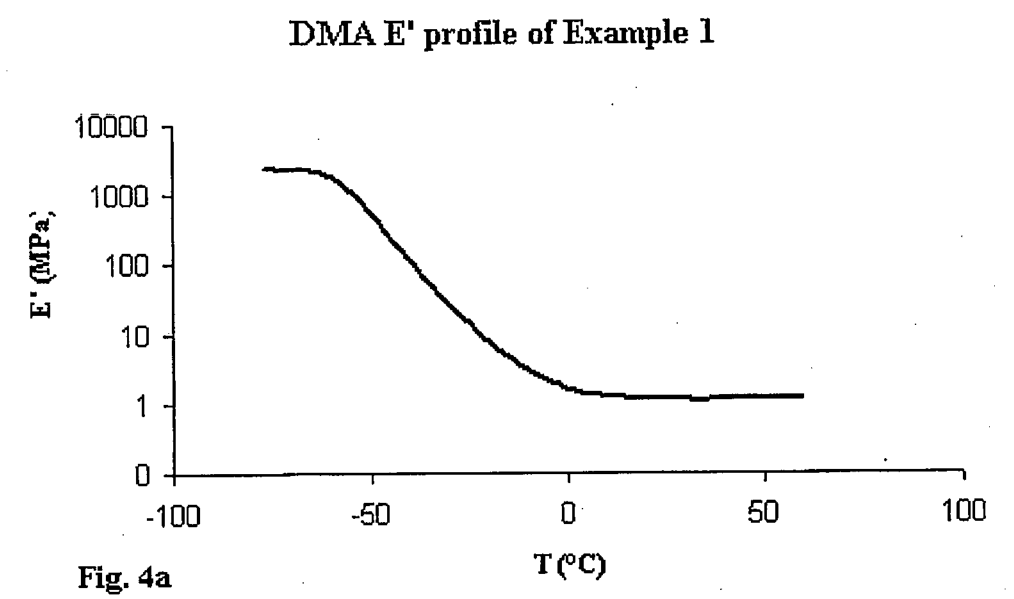
DMA E' profile of Example 1
10000
1000
100
10
1
0
E' (MPa)
-100
-50
0
50
100
T (°C)

Fig. 4a

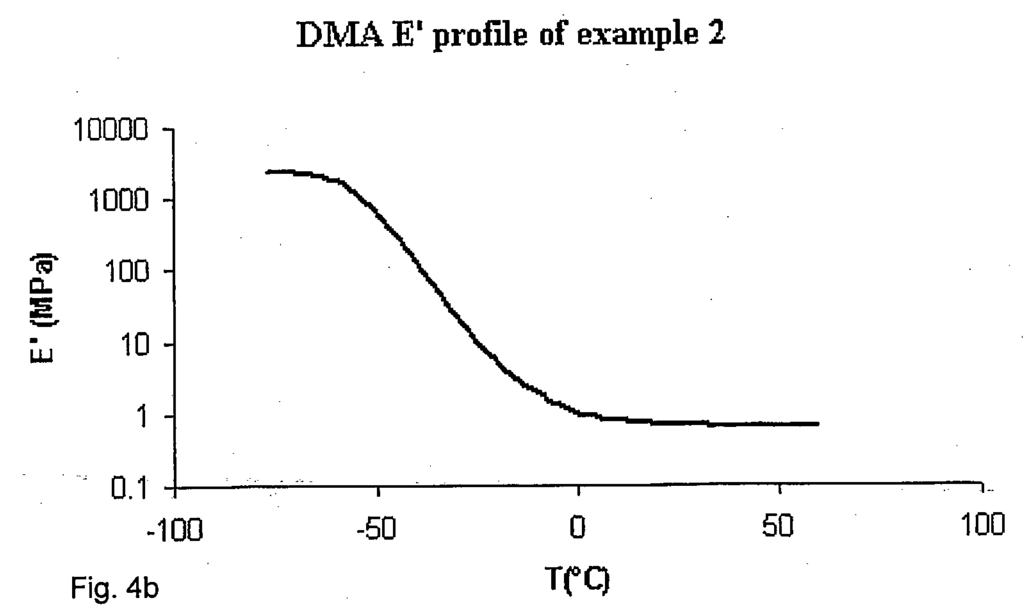
DMA E' profile of example 2
10000
1000
100
10
1
0.1
E' (MPa)
-100
-50
0
50
100
T(°C)

Fig. 4b

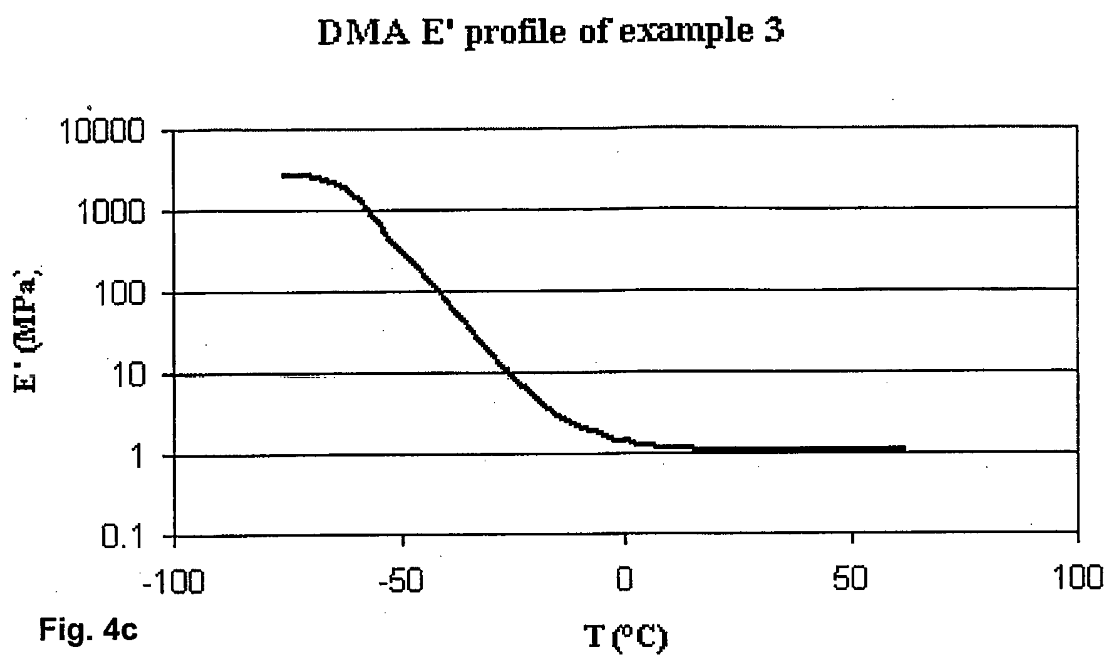
DMA E' profile of example 3
10000
1000
100
10
1
0.1
E' (MPa)
-100
-50
0
50
100
T (°C)

Fig. 4c

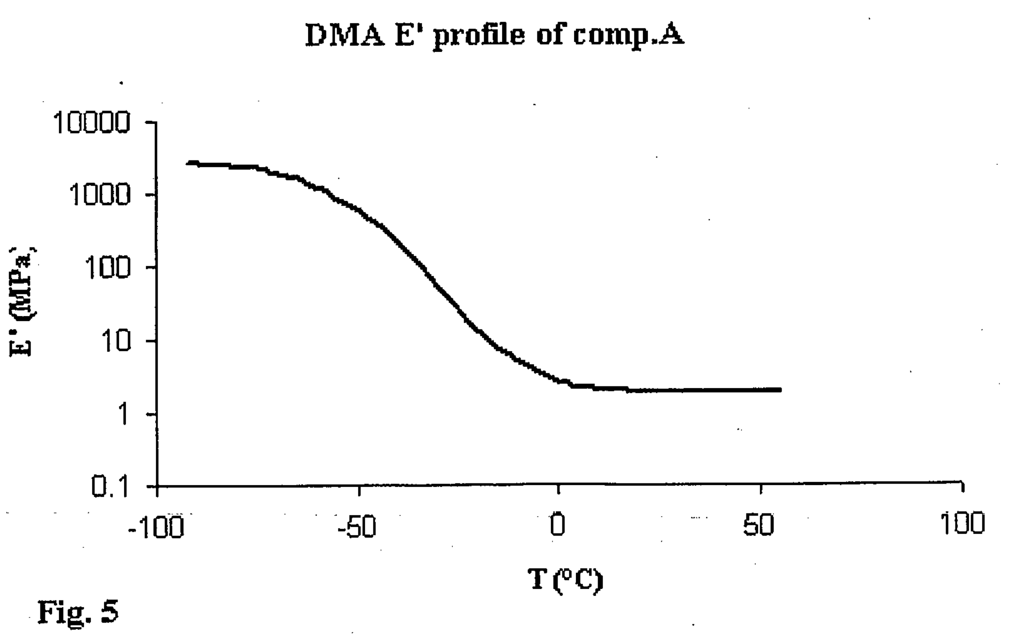
DMA E' profile of comp.A
10000
1000
100
10
1
0.1
E' (MPa)
-100
-50
0
50
100
T (°C)

Fig. 5

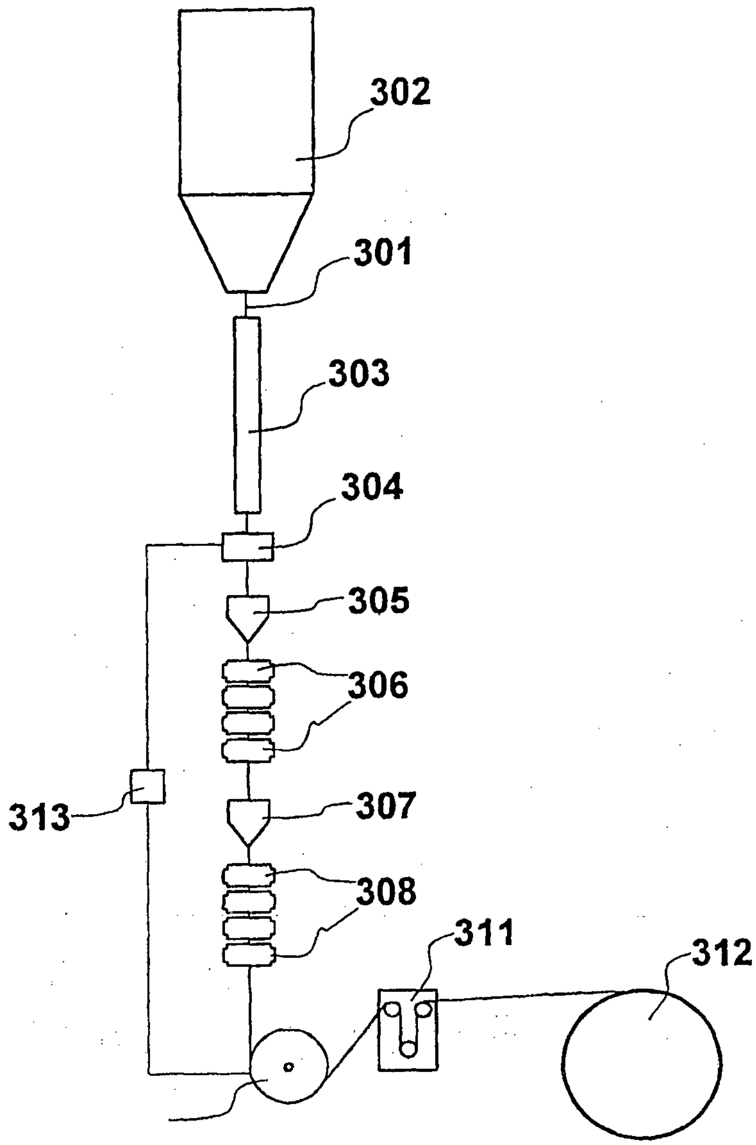


Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4962992 A
- US 6459837 B
- US 4474830 A
- US 5104433 A
- US 6014488 A
- WO 9204391 A
- EP 1070682 A
- WO 0149624 A
- EP 0311186 A
- US 7085466 B
- WO 031091177 A
- WO 03091177 A
- WO 0105724 A
- EP 0539030 B1
- WO 9926891 A
- WO 9967180 A
- EP 1112979 A
- WO 9850317 A

### Non-patent literature cited in the description

- Mechanical Properties and Testing of Polymers. 183-186
- **P.HAINES.** Thermal Methods of Analysis. 133
- **G. GRASSO ; F. MELI.** Microbending losses of cabled single-mode fibers. *ECOC,* 1988, 526
- optical fibers measurement methods - microbending sensitivity - method A, expandable drum. *IEC standard 62221,* October 2002